# EUROPEAN PATENT SPECIFICATION

(11) **EP 1 042 736 B1**
(45) Date of publication and mention of the grant of the patent: **24.09.2003**
(21) Application number: 97950389.3
(22) Date of filing: 25.12.1997
(51) Int. Cl.: G06T 9/00

(54) **SPRITE-BASED VIDEO CODING SYSTEM**
SPRITE-GESTÜTZTES VIDEOCODIERSYSTEM
SYSTEME DE CODAGE VIDEO ORIENTE IMAGES-OBJETS

(30) Priority: 30.12.1996 US 34558
(43) Date of publication of application: 11.10.2000
(73) Proprietor: SHARP KABUSHIKI KAISHA, Osaka-shi, Osaka-fu 545-0013 (JP)
(72) Inventor: CRINON, Regis, Jean, Albert, Camas, WA 98607 (US); SEZAN, Muhammed, Ibrahim, Camas, WA 98607 (US)
(74) Representative: Müller, Frithjof E., Dipl.-Ing.
(86) International application number: PCT/JP97/04814
(87) International publication number: WO 98/029834

(56) References cited:
- US-A- 5 692 063
- WANG J Y A ET AL: "REPRESENTING MOVING IMAGES WITH LAYERS" IEEE TRANSACTIONS ON IMAGE PROCESSING, vol. 3, no. 5, 1 September 1994, pages 625-638, XP000476836
- PROCEEDINGS OF THE IEEE WORKSHOP ON APPLICATIONS OF COMPUTER VISION SZELISKI R: 'IMAGE MOSAICING FOR TELE-REALITY APPLICATIONS' May 1994, pages 44 - 53, XP000861632
- IRANI M ET AL: "Video compression using mosaic representations" SIGNAL PROCESSING. IMAGE COMMUNICATION, vol. 4, no. 7, November 1995, page 529-552 XP004047098

## Description

### Field of the Invention

This invention relates to a mechanism by which a sprite (also called mosaic) is built automatically both in an encoder and a decoder, operating in a separate shape/texture coding environment such as MPEG-4. We also discuss applications that will utilize this technology.

### Background of the Invention

A mosaic image (the terms mosaic and sprite will be used interchangeably) is built from images of a certain scene object over several video frames. For instance, a mosaic of the background scene in case of a panning camera will result in a panoramic image of the background.

In MPEG-4 standardization activities, two major types of sprites and sprite-based coding are defined. The first type is called *off-line static sprite.* An off-line static sprite is a panoramic image which is used to produce a sequence of snapshots of the same video object (such as background). Each individual snapshot is generated by simply warping portions of the mosaic content and copying it to the video buffer where the current video frame is being reconstructed. Static sprites are built off-line and are transmitted as side information. Examples from sprite building and warping are known from " WANG J Y A ET AL: 'REPRESENTING MOVING IMAGES WITH LAYERS' IEEE TRANSACTIONS ON IMAGE PROCESSING, vol. 3, no. 5, 1 September 1994, pages 625-638, XP000476836'' and from " IRANI M ET AL: 'Video compression using mosaic representations' SIGNAL PROCESSING. IMAGE COMMUNICATION, vol. 4, no. 7, November 1995, page 529-552 XP004047098 "

The second type of mosaic is called *on-line dynamic sprite.* On-line dynamic sprites are used in predictive coding of a video object. A prediction of each snapshot of the video object in a sequence is obtained by warping a section of the dynamic sprite. The residual signal is coded and used to update the mosaic in the encoder and the decoder concurrently. The content of a dynamic mosaic may be constantly updated to include the latest video object information. As opposed to static sprites, dynamic sprites are built on line simultaneously in the encoder and decoder. Consequently, no additional information needs to be transmitted.

### Summary of the Invention

We have described a syntax for MPEG-4 which provided a unified syntax for off-line static sprite and on-line dynamic sprite-based coding. Our syntax also allows new modes that we refer as "dynamic off-line sprite-based coding," where predictive coding is performed on the basis of an off-line sprite (as opposed to directly copying the warped sprite as in the case of off-line static sprites), and "on-line static sprite-based coding," where the encoder and the decoder stop building the sprite further, and use it as a static sprite whether it is partially or fully completed.

Both off-line static and on-line dynamic sprite-based coding require constructing a sprite. In the former case, the sprite is built prior to transmission. In the later case, the sprite is built on-line during the transmission. So far, MPEG-4 has assumed that the outline (segmentation) of the object for which the sprite is going to be built is known *a-priori* at every time instant. Although this is true in certain applications, especially in post-production or content generation using blue screen techniques, automatic segmentation should be an integral part of sprite building in general. There is therefore a need for sprite-based coding systems where sprite building does not require *a-priori* knowledge of scene segmentation.

In this disclosure, we describe a sprite-based coding system (encoder and decoder) where sprite-building is automatic and segmentation of the sprite object is automatic and integrated into the sprite building as well as the coding process.

We assume that the sprite object can be distinguished from the rest of the video objects on basis of its motion. We assume that the sprite object moves according to the dominant component of the scene motion, which is usually due to camera motion or zoom. Hence, our system utilizes dominant motion, which is known to those of skill in the art.

Our system is suitable for a video object-based coding framework such as MPEG-4 where shape and texture of individual video objects are coded separately. The automatic segmentation integrated in the described system identifies the shape and texture of the sprite object.

There are several possible applications of the invention: In very low bit rate applications, coding of video frames in terms of video objects within may be expensive, because the shape of such objects may consume a significant portion of the limited bit budget. In such cases, our system can fallback to frame-based coding where automatic segmentation is only used to obtain better dominant motion estimation for sprite building and dominant motion-compensated prediction, as described in the "Operations" section, later herein.

The described coding system has features which make it suitable for applications where camera view may change frequently, such as video conferencing with multiple cameras, or a talk show captured with more than one camera. Our system may be applied to building multiple sprites and using them as needed. For instance, if the camera goes back and forth between two participants in front of two different backgrounds, two background sprites are built and used as appropriate. More specifically, when back ground A is visible, building of the sprite for background B and its use in coding is suspended until Background B appears again. The use of multiple sprites in this fashion is possible within the MPEG-4 framework, as will be described in the "Operations" section.

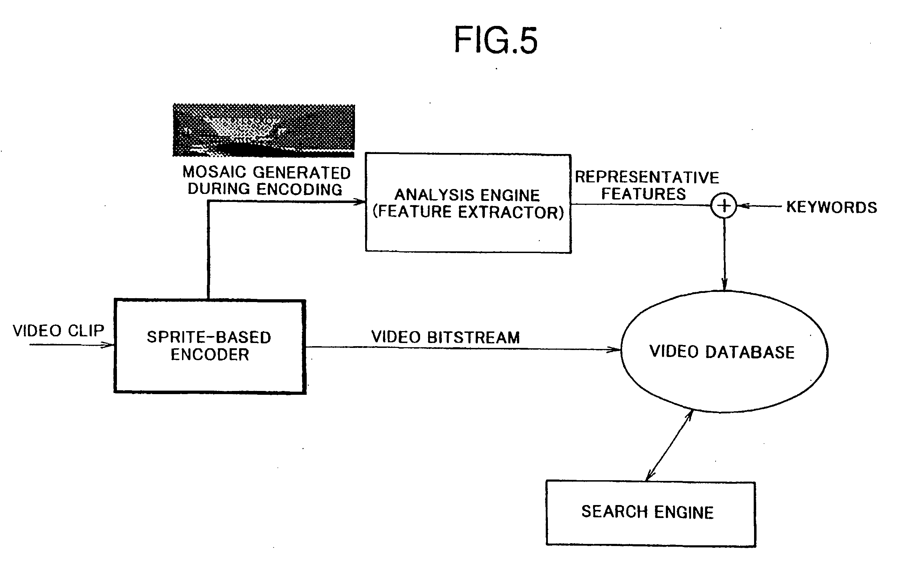

The disclosed system generates a sprite during the encoding process as will be described later herein. However, the resulting sprite may be subsequently used, after coding, as a representative image of the compressed video clip. Its features can be used to identify the features of the video clip which can then be used in feature-based (or content-based) storage and retrieval of video clip: Hence sprite-based coding provides a natural fit to populating a video library of bitstreams where sprite images generated during the encoding process act as representative images of the video clips. Indeed the mosaics can also be coded using a still image coding method. Such a video library system is depicted in Fig. 5.

In a similar fashion, one or several event lists may be associated with a background sprite. A possible choice for an event list is the set of consecutive positions of one or several vertices belonging to each foreground objects. Such a list can then be used to generate token representative image of the foreground object position in the sprite. Consecutive positions of each vertex could either be linked by a straight line or could share a distinct color. The consecutive positions of the vertex may be shown statically (all successive positions in the same sprite) or dynamically (vertex positions shown in the mosaic successively in time). A vertex here can be chosen to correspond to any distinctive feature of the foreground object, such as the center of gravity or a salient point in the shape of the object. In the latter case, and if several vertices are used simultaneously, the vertices might be arranged according to a hierarchical description of the object shape. With this technique, a user or a presentation interface has the freedom to chose between coarse to finer shapes to show successive foreground object positions in the background sprite. This concept may be used in a video library system to retrieve content based on motion characteristics of the foreground.

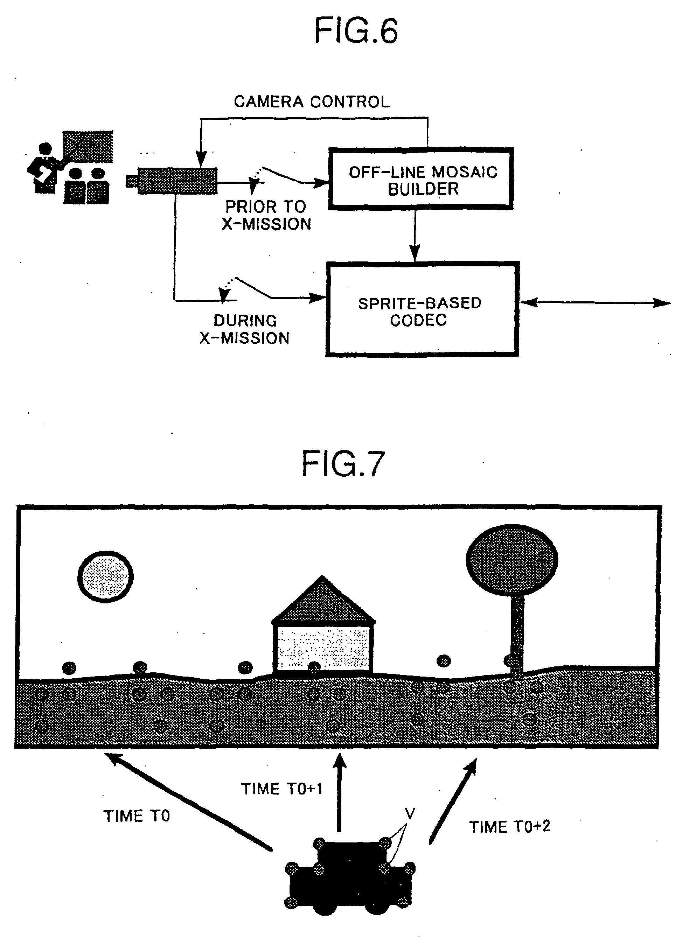

The automatic sprite building portion of the described system may be used in an off-line mode in a video conferencing application where the off-line sprite is built prior to transmission. Depiction of such a system is shown in Fig. 6. The described system can also generate a sprite that has a higher spatial resolution than the original images.

### Brief Descriptions of the Drawings

Fig. 1 illustrates the steps used in the method of the invention at time t-1.
Fig. 2 illustrates the steps used in the method of the invention at time t to t+1.
Fig. 3 illustrates the steps used in the method of the invention at time t+1 to t+2.
Fig. 4 is a block diagram of the method of the invention.
Fig. 5 is a block diagram of the system of the invention.
Fig. 6 depicts the system and method of the invention as used in a video conferencing system.
Fig. 7 depicts how consecutive portions of a foreground object may be represented in a mosaic according to the invention.

### Detailed Description of the Preferred Embodiments

The described method is designed to progressively learn to dissociate foreground from background while building a background mosaic at the same time. Steps 1 to 10 are repeated until the construction of the background is complete or until it is aborted.

### Assumptions

The notations are as follows:
*I*(*s*,*t*) denotes the content of video frame at spatial position s and at time t .
*W*_{*t*}_{←(t-1)} (*I*(*s*,*t*-1)) denotes a warping operator which maps the image at time (t-1) to time t. For a given pixel location *s*₀ in a video buffer at time t, this warping operation is performed by copying the pixel value at corresponding location *s* in frame (t-1). The correspondence between location *s*₀ and location *s* is established by a particular and well defined transformation such as an affine or a perspective transformation.
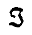 (*s*,*t*)is an indicator buffer, say for quantity x, which can be either 1 or 2 bits deep for all spatial location s.
*Thresh* is a threshold value. The operations ≤ *Thresh* and > *Thresh* are symbolic and can represent complex thresholding operations.

The size (per color component) of the current image frame *I*(*s*,*t*) is *M*_{*t*} × *N*_{*t*} and the size of the previous compressed/decompressed frame after warping, *W*_{*t*}_{←(*t*-1)}*(C*^{*-1*}*C*{*I*(*s*,t-1)}), is such that it can be inscribed in a rectangular array of *M*_{*t-1*} × *N*_{*t-1*} pixels.

The sprite *M(s,t) is* an image intensity (texture) buffer of size *M*_{*m*} x *N*_{*m*} per color component. The *field* 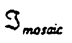 *(s,t) is* a single component field of the same size.

The construction of the sprite is started at time t. The image *I*(*s*,*t*-1) has already been compressed and decompressed and it is available in both the encoder and the decoder.

In the following steps, the image content is assumed to have a background and a foreground part (or VO) and a mosaic of the background is built

### Step 1: Initialization.

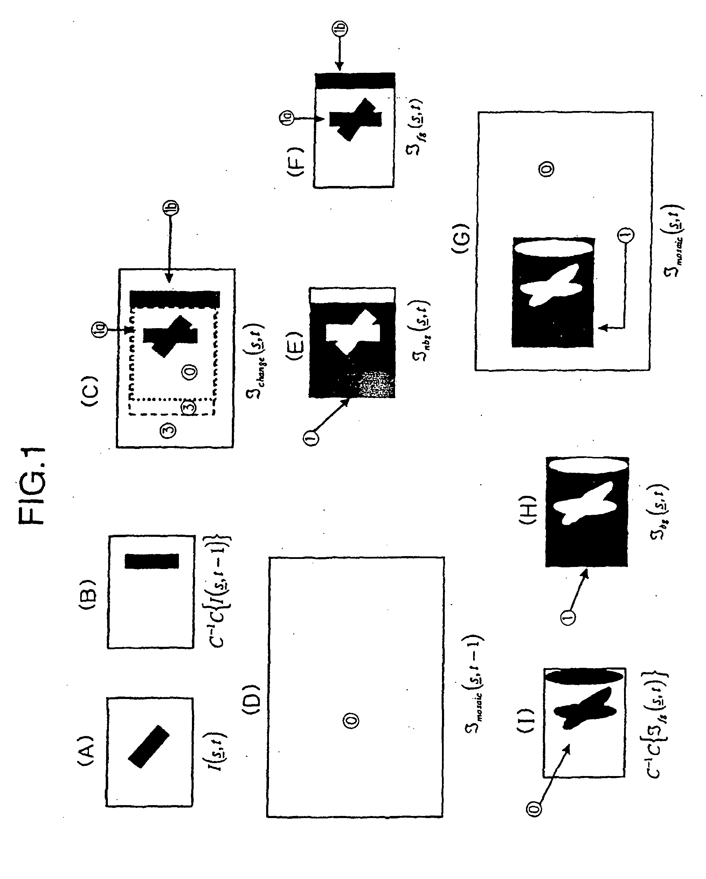

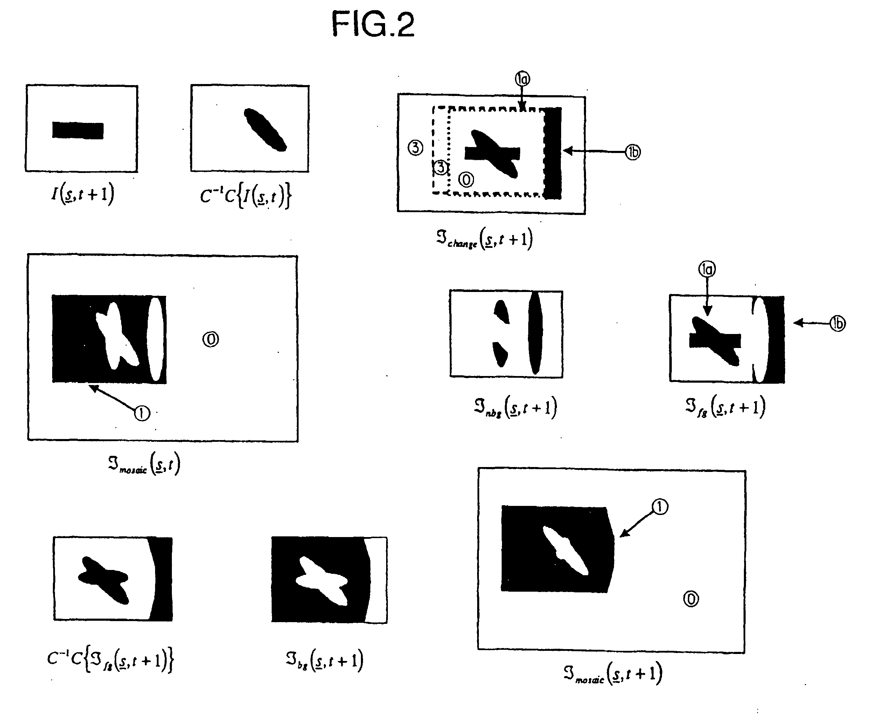

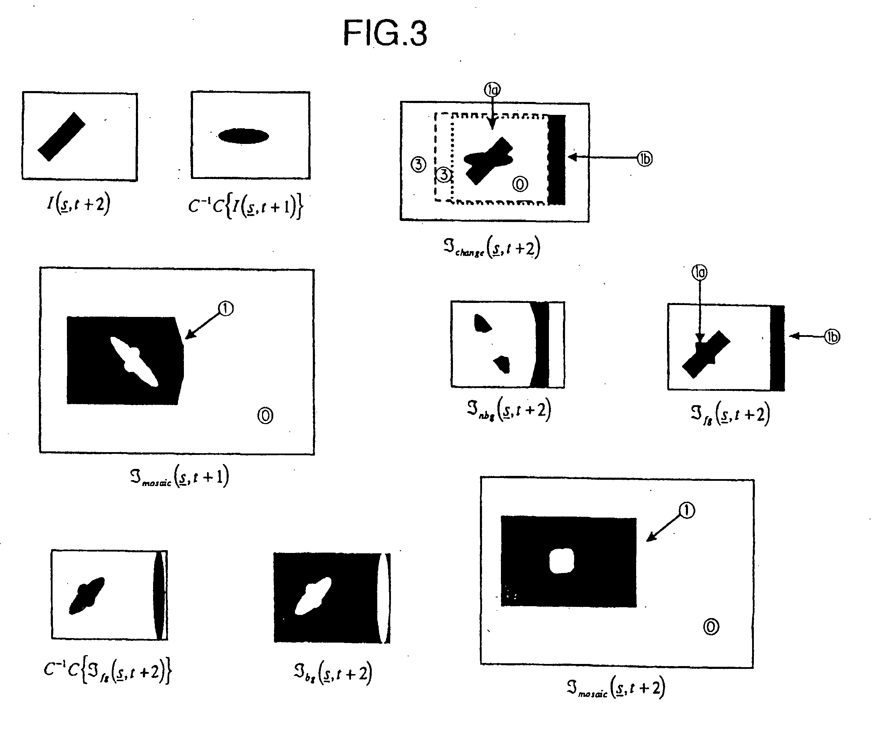

Referring now to Figs. 1-3, the results of the steps of the method described in the previous section are depicted. Fig. 1 illustrates steps 0 through 11 from time t-1, the instant when mosaic building is initiated, to time t when the a new video frame or field has been acquired. Figs. 2 and 3 illustrate steps 2 through 11 from time t to t+1 and from time t+1 to t+2, respectively. At the top left corner in each of these figures (A) is shown the newly acquired video frame which is compared to the previous video frame (next image field to the right)(B) once it has been compressed/de-compressed and warped (step 2). Step 3 is illustrated by the rightmost image field (C) in the first row of each figure. This field shows the area where content change has been detected. The status of the mosaic buffer is shown in the leftmost image field in the second row (D). This buffer is used to identify the new background areas as described in step 4. These areas correspond to regions where background was not known until now. Foreground identification is illustrated by the rightmost image in the second row (F). The operations associated with this image are described in step 5 which use the change map, the mosaic and the new background areas to define the foreground. Steps 6 and 7 of the method are illustrated by the two leftmost image fields in the third row (G, H). Here, background information comes from the compressed/decompressed foreground information obtained in the previous step. Finally , the mosaic updating process is illustrated by the bottom right image field (I). This process takes place in steps 8,9,10 and 11 of the method.

The binary field 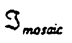 (*s*,t) is initialized to 0 for every position *s* in the buffer, meaning that the content of the mosaic is unknown at these locations.

The content of the mosaic buffer *M*(*s,t)* is initialized to 0.

The warping parameters from the current video frame *I*(*s,t*-1) to the mosaic is initialized to be *W*_{*t*}_{0←(t-1)}( ), t0 here representing an arbitrary fictive time. This initial warping is important as it provides a way to specify the "resolution" or the "time reference" used to build the mosaic. Potential applications of this initial mapping are making a mosaic with super spatial resolution or selection of an optimal time t0 minimizing the distortion introduced by the method. These initial warping parameters are transmitted to the decoder.

### Step 2: Acquisition.

The image *I*(*s*,*t*) is acquired and the forward warping parameters for mapping the image *I(s,t-1)* to *I*(*s*,*t*) are computed. The number of warping parameters as well as the method for estimating these parameters are not specified here. A dominant motion estimation algorithm such as the one given in [4] may be used. The warping parameters are composed with the current warping parameters, resulting in the mapping *W*_{*t*}_{←t0}( ). These parameters are transmitted to the decoder.

### Step 3: Detect Change in Content Between Previously Coded/Decoded Frame and Current Frame.

i) Initialization of a large buffer of size *M*_{*b*}*×N*_{*b*} greater than the image *(M*_{*b*} *> M*_{*t*}, *N*_{*b*} *> N*_{*t*}*)* and possibly as large as the mosaic. The buffer is 2 bits deep at every location. The buffer is initialized to 3 to indicate unknown status. 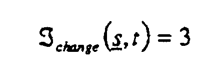
ii) Compute ( motion compensated ) scene changes over common image support. Give label 0 to all locations where change in content is deemed small. Give label 1a to locations where change is detected to be large. To make regions more homogeneous, implement additional operations (e.g. morphological operations ) which either reset label from 1a to 0 or set label from 0 to 1a. Regions labeled 0 will typically be considered and coded as part of the background Video Object while regions labeled 1a will typically be encoded as part of the foreground Video Object. 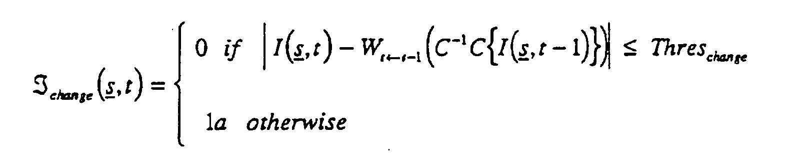 where *Thres*_{*change*} denotes a pre-defined threshold value.
iii) Tag new image regions, where support of image at time t does not overlap with support of image at time (t-1), as

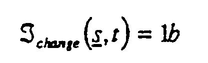

### Step 4: Identify New Background Areas.

A new background area is detected if there has not been any change in image content in the last two video frames. The corresponding area in the mosaic must also indicate that the background at this location is unknown. The resulting new background area is then pasted to any neighboring regions where background is known. As will be seen in later steps, incorporation of new background data into the mosaic must be done according to compressed/de-compressed background shape information to avoid any drift between encoder and decoder.

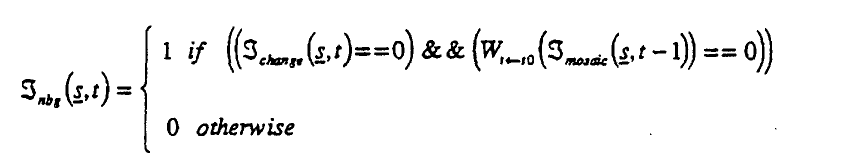

Here, the indicator value 0 means that the background is unknown.

### Step 5: Perform Foreground/Background Segmentation.

First look at regions where the background is known ( 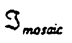 (*s*,t-1)= 1). Perform thresholding to distinguish the foreground from the background (case (i)). For regions where background is not known, tag as foreground any regions where changes have occurred (label 1a and 1b defined in step 3) (cases (iii) and (iv)).

Case (ii) represents new background areas which are excluded from being part of the foreground.
i) If 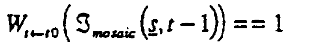 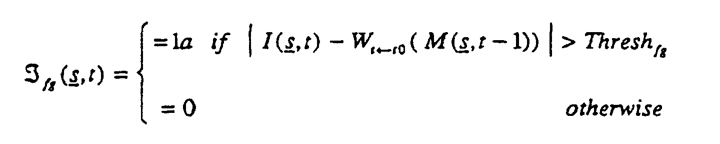 where *Thres*_{*fg*}is a pre-defined threshold value which is used here to segment foreground from background.
ii) else if 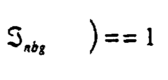 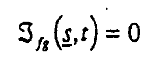
iii) else if 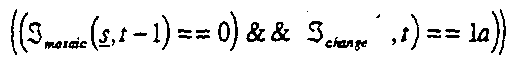 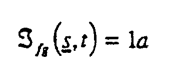 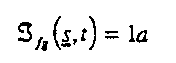
iv) else

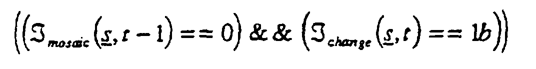

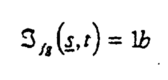

In cases (iii) and (iv), a sub-classification of the regions tagged as 1 into either regions 1a and 1b is used for the sole purpose of providing the encoder with the flexibility to follow different macroblock selection rules. For example, regions tagged as 1a might be preferably coded with inter-frame macroblocks since these regions occur over common image support On the other hand, regions tagged as 1b might preferably be coded with infra-frame macroblocks since these regions do not share a common support with the previous frame.

### Step 6: Compress/Decompress Foreground Shape and Texture.

Use conventional (I, P or B-VOP) prediction mode to encode foreground regions labeled as 1a and 1b. In the case of P or B-VOPs, individual macroblocks can either use inter-frame prediction or intra-frame coding. The pixels corresponding to regions labeled 1b (newly revealed background not represented in mosaic) are favored to be coded as intra macroblocks. The shape of the foreground is compressed and transmitted as well. Once de-compressed, this shape is used by the encoder and decoder to update the content of the mosaic. This process can be performed using the MPEG-4 VM 5.0 [3].

### Step 7: Get Background Shape.

Get background shape from compressed/de-compressed foreground shape. Compression/De-compression is necessary here to ensure that encoder and decoder share the same shape information. 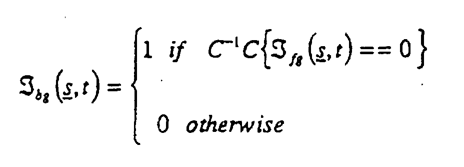 where *C*⁻¹ *C*{ }denotes shape coding/decoding which for instance can be performed as described in [3].

### Step 8: Initialize New Background Texture in Mosaic.

Identify regions where new background has occurred and initialize mosaic with content found in previous video frame (time (t-1)). Note that the field 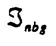 (*s*,t) cannot be used here since this information is unknown to the decoder.

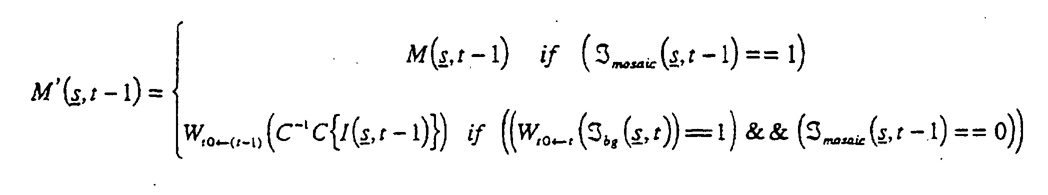

### Step 9: Calculate Background Texture Residuals From Mosaic Prediction.

If 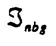 (*s*,t) == 1, calculate difference signal by using mosaic content as predictor. The resulting ΔI(*s*,t) is used to compute the difference signal over the entire macroblock where the pixel (*s*,*t*) is located. This difference signal is compared to conventional difference signals produced by using prediction from the previous and the next video frame (P or B prediction mode). The macroblock type is selected according to the best prediction mode. The residual signal is transmitted to the decoder along with the compressed background shape as described in [2].$\text{Δ} \text{I} \text{(} {\text{s}}_{̲} \text{,t} \text{)=} \text{I} \text{[} {\text{s}}_{̲} \text{,t)-} {\text{W}}_{\text{t}} {\text{}}_{\text{←t0}} \text{(} \text{M'} \text{(} {\text{s}}_{̲} \text{,} \text{t} \text{-1))}$

### Step 10: Update Background Shape in Mosaic.

Update mosaic map to include shape of new background.

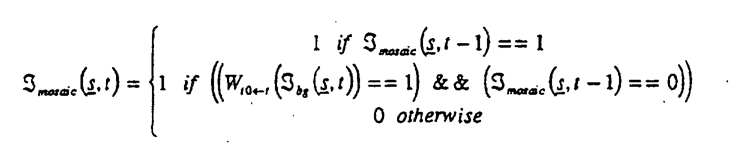

### Step 11: Update Mosaic.

Update content of the mosaic in regions corresponding to new or non-covered background in frame t

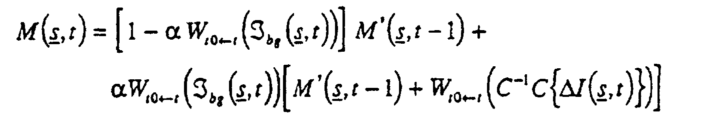

The selection of the value of the blending parameter α (0 < α <1) in the above equation is application dependent.

The method described above builds the mosaic with reference to time t0, which can be a time instant in the past or can be the current time or a future time instant It is straightforward to rewrite the above equations for the case where the mosaic is continuously warped to the current time instant t.

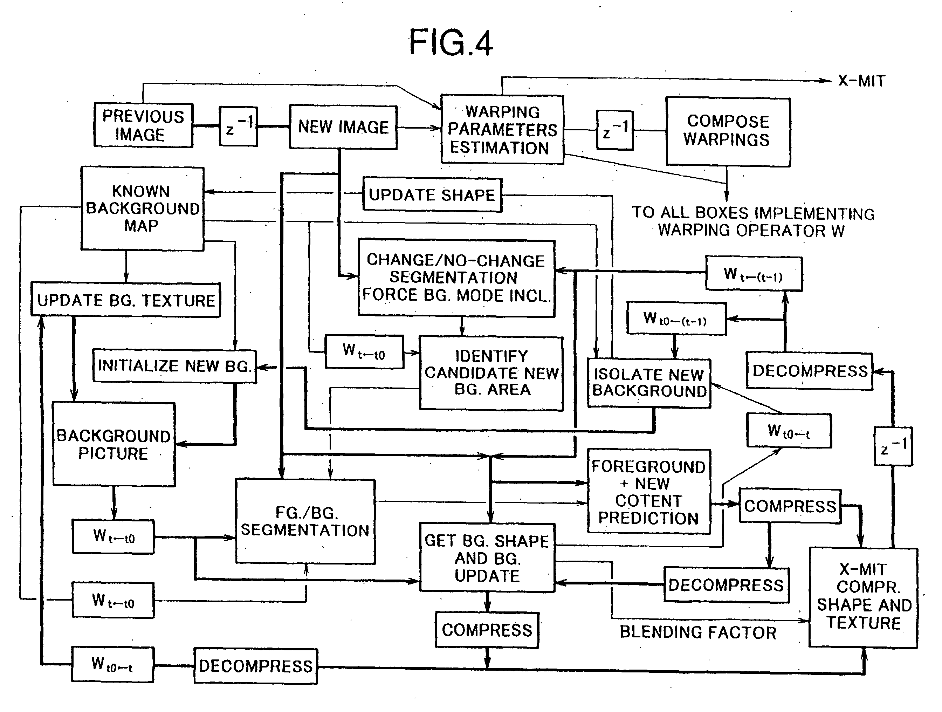

Turning now to Fig. 4, a block diagram of the method is depicted. The purpose of this drawing is to highlight the dependencies in the various components and quantities used by the method of the invention. It also emphasizes the various warping and un-warping stages that are necessary to align consecutive video fields.

Fig. 5 shows a block diagram of the digital video database system that uses the method of the current invention.

Fig. 6 shows a block diagram of a video conferencing system that use an off-line built background sprite as dynamic sprite during transmission

Fig. 7 shows an example of how consecutive positions of a foreground object (here a car) may be represented in a mosaic by plotting the successive positions of one or several salient points (V) belonging to the shape of the foreground. The color of the vertices is changed from t0 to t0+1 and from t0+1 to t0+2 to avoid any confusion. In this example, the vertices are shown statically in the mosaic and they capture one level of shape description only.

### Operation of the Various Embodiments

### A Mosaic-Based Video Conferencing and Videophone System.

Referring now to Figs. 5 and 6, the communication protocol can include a configuration phase (time adjustable) during which an on-line background mosaic is being built. During this period, each videophone uses the small displacements of the head and shoulder to build a background mosaic. The displacements of the foreground can be voluntary (system guides user) or not (no gain in coding efficiency if foreground does not move). In this case the method described above is used to build the background mosaic. During normal video transmission, the mosaic is used as a dynamic sprite and the blending factor is set to 0 to prevent any updating. In this case, macroblock types may be dynamic or static. In one extreme case, all macroblocks are static-type macroblocks meaning that the background mosaic is being used as a static sprite. In another extreme case, all macroblocks are of type dynamic and the mosaic is being used as a dynamic (predictive) sprite. This later case requires a higher data transmission bandwidth. Alternatively, a mosaic of the background scene can be built before the transmission and then be used as a static or a dynamic sprite during normal transmission session.

### A Mosaic-Based Video Database

The above method may be used in populating and searching a database of video bitstreams, i.e., a database of compressed bitstreams. In such a system, video clips are compressed using the above method. The result is a compressed bitstream and a mosaic generated during the encoding process. The mosaic image can be used as a representative image of the video clip bitstream and its features can be used in indexing and retrieval of the bitstream belonging to that video clip.

Furthermore, motion trajectory of the foreground can be overlaid on top of mosaic to provide user with rough description of foreground motion in the sequence. Trajectory of a foreground object can be represented by a set of points, each representing the position of a particular feature of the foreground object at a given instant The feature points can be salient vertices of the object shape. A hierarchical description of object shape would bring the additional advantage of allowing the database interface to overlay from coarse to fine shape outlines in the mosaic. Consecutive vertex positions can be shown together in the same background mosaic or could be displayed successively in time with the same mosaic support Note that this idea provides the additional benefit of facilitating motion-based retrieval since the motion of the foreground is represented in mosaic reference space.

Referring now to Fig. 7, the background mosaic is comprised of the grass, sky, sun and tree. The foreground object is a car subject to an accelerated motion and moving from left to right. The shape of the car is shown in black. Eight vertices "V" have been selected to represent this shape. Fig. 7 shows that consecutive positions of the car can be represented in the mosaic by simply plotting the vertices at their successive positions. The color of the vertices is changed from t0 to t0+1 and from t0+1 to t0+2 to avoid any possible confusion. In this example, the vertices are shown statically in the mosaic and they capture one level of shape description only. Finally, mosaic can be used as an icon. By clicking on the mosaic icon, user would trigger playback of the sequence.

### Support of Multiple Mosaics in Applications with Frequent Scene Changes.

In the case where the video sequence includes rapid and frequent changes from one scene to another, as may be the case in video conferencing applications, it is desirable to build two or more (depending on how many independent scenes there are) mosaics simultaneously. Having more than one mosaic does not force the system to re-initiate the building of a new mosaic each time a scene cut occurs. In this framework, a mosaic is used and updated only if the video frames being encoded share similar content. Note that more than one mosaic can be updated at a time since mosaics are allowed to overlap.

### Optimal Viewport.

The arbitrary mapping *W*_{(*t*-1)←*t*0}( ) used at the beginning of the method can be used to represent the optimal spatial representation domain for the mosaic where distortion and artifacts are minimized. While this is at this point an open problem that will require further study on our part, there is little doubt that the possibility exists to find an optimal mosaic representation where ambiguities (parallax problems) and/or distortion are minimized according to pre-defined criterion.

### Improved Resolution

Likewise, the arbitrary mapping *W*_{(*t*-1)←*t*0}() can include a zooming factor which has the effect of building a mosaic whose resolution is potentially 2,3, or N times larger than the resolution of the video frames used to build it The arbitrary fixed zooming factor provides a mechanism by which fractional warping displacements across consecutive video frames are recorded as integer displacements in the mosaic. The larger the zooming factor, the longer the sequence must be before the mosaic can be completed (more pixel locations to fill up). The MPEG-4 framework allows the implementation of such a scheme.

We denote this arbitrary mapping *W*_{*res*} (). In the linear case, this operator is the identity matrix multiplied by a constant scalar greater than 1. This scaling factor defines the enlargement factor used for the mosaic. The mosaic update equation shown in step 11 can be re-written as follows.

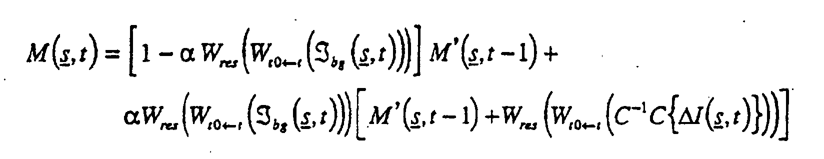

This equation shows that the mosaic is being built at the fixed time t0 which can be the time corresponding to the first video frame, the time corresponding to the final frame or any other time in between. In this case, the arbitrary mapping *W*_{*res*} (), is always composed with the warping transformation *W*_{*t*}_{0←}_{*t*} When the mosaic is continuously warped toward the current video frame, the update equation must be re-written as follows:

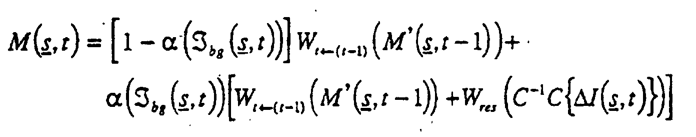

The equation above shows that the arbitrary mapping *W*_{*res*} () is no longer composed with the frame-to-frame warping operator *W*_{*t*}_{←(}_{*t*}₋₁₎ but instead applied to the compressed/de-compressed residuals. In MPEG-4, the arbitrary operator *W*_{*res*}() can be transmitted with appropriate extension of the syntax, as the first set of warping parameters, which currently supports only positioning the first video frame in the mosaic buffer via a translational shift.

### Coding of Video Sequences at Very Low Bit Rates.

- In very low bit rate applications, the transmission of shape information may become an undesirable overhead. The method described above can still operate when transmission of shape information is turned off. This is accomplished by setting background shape to one at every pixel (step 7) and setting the blending factor α to 1 (step 11). The latter setting guarantees that the mosaic will always display the latest video information which is a necessity in this situation since foreground is included in the mosaic. In this situation, the macroblock types can be either intra, inter, static sprite or dynamic sprite. The sprite is being used as a static sprite if all macroblocks are of type static. This is the most likely situation for a very low bit rate application since no residual is transmitted in this case. The sprite is being used as a dynamic sprite if all macroblocks are of type dynamic.

## Claims

1. A method for building in a coding environment a mosaic representing a composite of multiple images, comprising:
forming a mosaic out of a first image;
segmenting a second image into background regions and foreground regions by identifying changes between the warped second image and the mosaic; and
updating the mosaic only with the segmented background regions of the second image,
the method including:
a ) identifying regions that have changed between the first and second image;
b ) segmenting background regions in the second image where associated regions in a current mosaic are unknown and where there have not been any identified changes in the associated regions of the first and second image;
c ) segmenting background regions in the second image where there have not been any identified changes between the second image and the associated regions in the current mosaic;
d) segmenting foreground regions in the second image where there have been changes between the second image and the associated regions in the current mosaic;
e) segmenting foreground regions in the second image where there have been identified changes between first image and second image and associated regions in the current mosaic are unknown; and
f) segmenting foreground regions in the second image where there have been identified regions that only exist in the second image and associated regions in the current mosaic are unknown.

2. The method of claim 1 wherein the associated regions in the mosaic are derived by first warping the mosaic and then comparing same pixel locations in the second image and the warped mosaic.

3. The method of claim 1 including tagging background and foreground regions in the second image according to the segmented regions.

4. The method of claim 3 including:
representing the background regions in the second image by encoding and decoding shape information identifying foreground regions; and
tagging all non-foreground regions of the decoded second image as background regions.

5. The method of claim 1 including:
determining the differences between the background regions in the second image and associated regions in the mosaic; and
using the decoded differences to update the mosaic.

6. The method of claim 5 including transmitting the encoded differences over a transmission medium to a decoder; and
using the encoded differences in the background regions to update a second mosaic in the decoder.

7. The method of claim 1 including applying a blending factor that selectively varies an amount of the mosaic updated with the associated background region of the second image.

8. The method of claim 7 including the following:
conducting a configuration phase where a background mosaic is built off line;
setting the blending factor to zero to prevent the mosaic from being updated for a given period of time after the configuration phase; and
using the mosaic during the given period of time to encode and decode transmitted image data.

9. The method of claim 1 including:
setting the entire second image to a single background region to avoid having to send shape information; and
setting the blending factor to always incorporate data representing the decoded second image.

10. The method of claim 1 including selecting a fixed initial warping transformation for optimizing viewing conditions and mosaic quality.

## Patentansprüche

1. Verfahren zum Aufbauen in einer Codierumgebung eines Mosaiks, das eine Zusammensetzung von mehreren Bildern darstellt, mit:
Erzeugen eines Mosaiks aus einem ersten Bild;
Segmentieren eines zweiten Bildes in Hintergrundbereiche und Vordergrundbereiche durch Identifizieren von Änderungen zwischen dem verformten (warped) zweiten Bild und dem Mosaik;
Aktualisieren des Mosaiks nur mit den segmentierten Hintergrundbereichen des zweiten Bildes, wobei das Verfahren umfasst:
a) Identifizieren von Bereichen, die sich zwischen dem ersten und zweiten Bild verändert haben;
b) Segmentieren von Hintergrundbereichen in dem zweiten Bild, wobei zugeordnete Bereiche in einem aktuellen Mosaik unbekannt sind, und wobei es keine identifizierten Änderungen in den zugeordneten Bereichen der ersten und zweiten Bilder gegeben hat;
c) Segmentieren von Hintergrundbereichen in dem zweiten Bild, wo es keine identifizierten Änderungen zwischen dem zweiten Bild und den zugeordneten Bereichen in dem aktuellen Mosaik gegeben hat;
d) Segmentieren von Vordergrundbereichen in dem zweiten Bild, wo es keine Änderungen zwischen dem zweiten Bild und den zugeordneten Bereichen in dem aktuellen Mosaik gegeben hat;
e) Segmentieren von Vordergrundbereichen in dem zweiten Bild, wo es identifizierte Änderungen zwischen ersten Bild und dem zweiten Bild gegeben hat und zugeordnete Bereiche in dem aktuellen Mosaik unbekannt sind; und
f) Segmentieren von Vordergrundbereichen in dem zweiten Bild, wo es identifizierte Bereiche gegeben hat, die nur in dem zweiten Bild existieren, und zugeordnete Bereiche in dem aktuellen Mosaik unbekannt sind.

2. Verfahren gemäß Anspruch 1, bei dem die zugeordneten Bereiche in dem Mosaik hergeleitet werden, indem zuerst das Mosaik verformt und dann die gleichen Pixelstellen in dem zweiten Bild und dem verformten Mosaik verglichen werden.

3. Verfahren gemäß Anspruch 1 mit einem Markieren von Hintergrund- und Vordergrundbereichen in dem zweiten Bild gemäß den segmentierten Bereichen.

4. Verfahren gemäß Anspruch 3 mit:
Darstellen der Hintergrundbereiche in dem zweiten Bild durch Codieren und Decodieren der die Vordergrundbereiche identifizierenden Forminformation; und
Markieren aller Nicht-Vordergrundbereiche des decodierten zweiten Bildes als Hintergrundbereiche.

5. Verfahren gemäß Anspruch 1 mit:
Bestimmen der Unterschiede zwischen den Hintergrundbereichen in dem zweiten Bild und zugeordneten Bereichen in dem Mosaik; und
Verwenden der decodierten Unterschiede, um das Mosaik zu aktualisieren.

6. Verfahren gemäß Anspruch 5 mit einem Übertragen der codierten Unterschiede über ein Übertragungsmedium an einen Decodierer; und
Verwenden der codierten Unterschiede in den Hintergrundbereichen, um ein zweites Mosaik in dem Decodierer zu aktualisieren.

7. Verfahren gemäß Anspruch 1, mit Anwenden eines Mischfaktors, der eine Menge des Mosaiks selektiv verändert, das mit dem zugeordneten Hintergrundbereich des zweiten Bildes aktualisiert wurde.

8. Verfahren gemäß Anspruch 7 mit dem Folgenden:
Durchführen einer Konfigurationsphase, wobei ein Hintergrundmosaik offline aufgebaut wird;
Einstellen des Mischfaktors auf Null, um zu verhindern, dass das Mosaik für eine vorgegebene Zeitspanne nach der Konfigurationsphase aktualisiert wird; und
Verwenden des Mosaiks während der vorgegebenen Zeitspanne, um übertragene Bilddaten zu codieren und zu decodieren.

9. Verfahren gemäß Anspruch 1 mit:
Einstellen des gesamten zweiten Bildes auf einen einzigen Hintergrundbereich, um zu vermeiden, Forminformation senden zu müssen;
Einstellen des Mischfaktors, um immer Daten aufzunehmen, die das decodierte zweite Bild darstellen.

10. Verfahren gemäß Anspruch 1 mit einem Auswählen einer festen Anfangsverformungstransformation zum Optimieren von Betrachtungsbedingungen und Mosaikqualität.

## Revendications

1. Procédé de construction, dans un environnement de codage, d'une mosaïque représentant une composition de plusieurs images, comprenant :
la formation d'une mosaïque à partir d'une première image ;
la segmentation d'une seconde image en régions d'arrière-plan et régions d'avant-plan par identification des variations entre la seconde image courbée et la mosaïque ; et
la mise à jour de la mosaïque uniquement- avec les régions d'arrière-plan segmentées de la seconde image,
le procédé comprenant :
a) l'identification de régions ayant fait l'objet de variations entre la première et la seconde image ;
b) la segmentation de régions d'arrière-plan de la seconde image dans laquelle des régions associées d'une mosaïque présente sont inconnues et dans laquelle il n'a été identifié aucune variation des régions associées de la première et de la seconde image ;
c) la segmentation de régions d'arrière-plan de la seconde image dans laquelle aucune variation n'a été identifiée entre la seconde image et les régions associées de la mosaïque présente ;
d) la segmentation de régions d'avant-plan de la seconde image dans laquelle sont apparues des variations entre la seconde image et les régions associées de la mosaïque présente ;
e) la segmentation de régions d'avant-plan de la seconde image dans laquelle ont été identifiées des variations entre la première image et la seconde image et dans laquelle des régions associées de la mosaïque présente sont inconnues ; et
f) la segmentation de régions d'avant-plan de la seconde image dans laquelle ont été identifiées des régions qui n'existent que dans la seconde image et dans laquelle des régions associées de la mosaïque présente sont inconnues.

2. Procédé selon la revendication 1 dans lequel des régions associées de la mosaïque sont dérivées par une première opération de courbure de la mosaïque, puis comparaison des mêmes emplacements de pixels dans la seconde image et dans la mosaïque courbée.

3. Procédé selon la revendication 1 comprenant le repérage des régions d'arrière-plan et d'avant-plan de la seconde image en fonction des régions segmentées.

4. Procédé selon la revendication 3 comprenant :
la représentation des régions d'arrière-plan de la seconde image par codage et décodage des informations de forme servant à identifier des régions d'avant-plan ; et
le repérage de toutes les régions n'appartenant pas à l'avant-plan de la seconde image décodée, considérées comme des régions d'arrière-plan.

5. Procédé selon la revendication 1 comprenant :
la détermination des différences entre les régions d'arrière-plan de la seconde image et les régions associées de la mosaïque ; et
l'utilisation des différences décodées pour mettre à jour la mosaïque.

6. Procédé selon la revendication 5 comprenant la transmission des différences codées sur un support de transmission vers un décodeur ; et
l'utilisation des différences codées dans les régions d'arrière-plan pour mettre à jour une seconde mosaïque dans le décodeur.

7. Procédé selon la revendication 1 comprenant l'application d'un facteur de mélange destiné à faire varier sélectivement une quantité de la mosaïque mise à jour en fonction de la région d'arrière-plan associée de la seconde image.

8. Procédé selon la revendication 7 comprenant les opérations consistant à :
mettre en oeuvre une phase de configuration dans laquelle une mosaïque d'arrière-plan est construite en différé ;
fixer le facteur de mélange à zéro (0) pour éviter que la mosaïque ne soit mise à jour pendant une durée donnée au-delà de la phase de configuration ; et
utiliser la mosaïque pendant la durée donnée pour coder et décoder les données d'images transmises.

9. Procédé selon la revendication 1 comprenant :
la définition de la totalité de la seconde image comme région d'arrière-plan unique pour éviter l'émission d'informations de forme ; et
la définition du facteur de mélange pour incorporer en permanence des données représentant la seconde image décodée.

10. Procédé selon la revendication 1 comprenant la sélection d'une transformation par courbure initiale fixe pour l'optimisation des conditions de visualisation et de la qualité de la mosaïque.
